# EUROPÄISCHE PATENTSCHRIFT

(11) **EP 3 568 885 B1**
(45) Veröffentlichungstag und Bekanntmachung des Hinweises auf die Patenterteilung: **06.09.2023**
(21) Anmeldenummer: 17822127.1
(22) Anmeldetag: 06.12.2017
(51) Int. Cl.: B60T 13/66, B60T 17/00, B60T 17/04, B60T 17/22, B61G 5/10, B61H 13/34, B61L 15/00, H01R 13/627, H01R 13/74, H01R 101/00

(54) **ELEKTRISCHE VERBINDUNGSVORRICHTUNG ZUR STROMVERSORGUNG VON GEKOPPELTEN WAGGONS EINES SCHIENENFAHRZEUGS**
ELECTRICAL CONNECTING APPARATUS FOR SUPPLYING POWER TO COUPLED CARS OF A RAIL VEHICLE
DISPOSITIF DE CONNEXION ÉLECTRIQUE POUR L'ALIMENTATION ÉLECTRIQUE DE WAGONS ACCOUPLÉS D'UN VÉHICULE FERROVIAIRE

(30) Priorität: 11.01.2017 CN 201720032873 U
(43) Veröffentlichungstag der Anmeldung: 20.11.2019
(73) Patentinhaber: Harting Electric GmbH & Co. KG, 32339 Espelkamp (DE)
(72) Erfinder: FERDERER, Albert, 32339 Espelkamp (DE); QUAST, Frank, 33611 Bielefeld (DE); HORSTMANN, Jens, 32339 Espelkamp (DE)
(86) Internationale Anmeldenummer: PCT/DE2017/101045
(87) Internationale Veröffentlichungsnummer: WO 2018/130238

(56) Entgegenhaltungen:
- WO-A1-01/68433
- CN-A- 106 129 646
- DE-A1-102004 041 809
- DE-A1-102009 043 516
- DE-A1-102011 006 887
- DE-A1-102013 201 125
- DE-U1-202011 051 250
- US-A- 4 711 510

## Beschreibung

### Technisches Gebiet

Die vorliegende Erfindung betrifft eine elektrische Verbindungsvorrichtung zur Stromversorgung von miteinander gekoppelten Waggons von Schienenfahrzeugen mit einem ersten Steckverbinder, an welchem wenigstens ein Kabel angeschlossen ist, und einem korrespondierenden zweiten Steckverbinder, welcher zur Befestigung an einer Waggonwand vorgesehen ist, wobei der erste und der zweite Steckverbinder jeweils mit einem oder mehreren korrespondierenden, in einer Steckrichtung zusammensteckbaren ersten bzw. zweiten Kontaktelementen versehen sind und das Kabel des ersten Steckverbinders in einer ersten Kabelabgangsrichtung aus dem ersten Steckverbinder tritt.

### Stand der Technik

Um eine Stromversorgung (Leistungsversorgung) von miteinander gekoppelten Waggons eines Schienenfahrzeugs wie z.B. eines Zuges herzustellen, werden an einander zugewandten Querwänden aufeinanderfolgender Waggons elektrische Verbindungsvorrichtungen angeordnet, über welche mittels eines oder mehrerer Kabel eine elektrische Verbindung zwischen den Waggons hergestellt wird. Hierzu ist in der Regel an jedem der Querwände wenigstens ein stationär montierter Steckverbinder angeordnet, welche über eine Leitung oder ein Kabel miteinander verbunden werden. Das Kabel ist dabei mit Steckverbindern versehen, welche zu den stationären Steckverbindern komplementär sind und jeweils in einen der stationär montierten Steckverbinder eingesteckt werden können. Aufgrund der beträchtlichen Stromstärken sind die Kabel sowie die Steckverbinder bzw. deren Kontaktelemente entsprechend groß zu dimensionieren, was die Handhabung beim Erstellen der Steckverbindung erschwert. Um die relative Beweglichkeit der aufeinanderfolgenden Waggons sicherzustellen, ist eine Länge des Kabels länger bemessen, als ein Abstand der Querwände der Waggons. Das Kabel hängt damit aufgrund seines Gewichts nach unten durch, womit längs des Kabels eine Zugkraft auf die durch die Verbindungsvorrichtung bereitgestellte Steckverbindung wirkt.

Die DE 20 2011 051 250 U1 zeigt eine elektrische Verbindungseinheit zur Stromversorgung von miteinander gekoppelten Waggons von Schienenfahrzeugen, insbesondere Waggons eines Zuges, mit mindestens einem oder mehreren ersten Steckverbinder(n), an welche jeweils einer oder mehrere Leitungen angeschlossen sind, und wenigstens einem oder mehreren korrespondierenden Steckverbinder(n), die an einer Wand des Waggons in einer Ebene E befestigbar sind bzw. im montierten Zustand befestigt sind, wobei die ersten und zweiten Steckverbinder mit korrespondierenden, in einer Steckrichtung zusammensteckbaren, Kontakten versehen sind, wobei die Steckrichtung schräg zur Befestigungsebene an der Waggonwand in einem spitzen Winkel liegt.

Die DE 10 2013 201 125 A1 zeigt einen Steckverbinder insbesondere zur Verwendung im Bordnetz von Kraftfahrzeugen mit einem Innenleiter der in einem elektrisch isolierenden, Gehäuse angeordnet ist und einem Umformteil, das in dem Gehäuse angeordnet ist, wobei der Innenleiter ein leitungsseitiges erstes Innenleiterteil zum Anbinden an eine Leitung, und ein steckseitiges zweites Innenleiterteil zur Verbindung mit einem Stecker aufweist.

Die DE 10 2011 006 887 A1 zeigt einen elektrischen Verbinder zum Herstellen einer Steckverbindung mit einem Gegenverbinder. Der elektrische Verbinder weist ein Gehäuse auf, in welchem endseitige Leitungsabschnitte von mehreren Leitungen aufnehmbar sind. Dabei ist vorgesehen, dass die endseitigen Leitungsabschnitte der Leitungen schräg zueinander verlaufend in dem Gehäuse aufnehmbar sind.

Die DE 10 2009 043 516 A1 zeigt ein Steckerelement für einen abgedichteten Hochspannungssteckverbinder, durch den insbesondere in einem Automobil ein elektrischer Leiter mit einem Gegenkontaktelement eines Gegensteckerelements elektrisch leitend verbunden werden kann. Dabei wird ein Gehäusekörper in Steckrichtung mit einem das Gegenkontaktelement aufweisenden Steckorgan zusammengesteckt.

Die DE 10 2004 041 809 B4 zeigt einen Winkelkuppler für eine Steckverbindung mit einem Winkelteil und einem Gehäuse, die relativ zueinander drehbar sind.

Die CN 106 129 646 A zeigt einen Wandsteckverbinder für ein Schienen-Transitfahrzeug. In den Steckverbinder läuft ein Kabel parallel ein und antiparallel wieder heraus.

Die WO 01/68433 A1 zeigt ein Verbindungskabel zur elektrischen Verbindung zweier durch einen Zwischenraum voneinander beabstandeter Vorrichtungen, insbesondere zweier hintereinander laufender, aneinander gekoppelter Wagen, insbesondere eines Eisenbahnzuges, einer U-Bahn, einer Straßenbahn oder dgl.

Die CN 106 129 646 A zeigt eine Leistungssteckverbindung für Schienenverkehrsfahrzeuge. Die Steckverbindung umfasst einen Steckverbinder und mehrere Buchsen, wobei die in die Buchsen eingesteckten Steckverbinder geneigt bzw. abgewinkelt angeordnet sind.

Die US 4,711,510 A zeigt einen mehradrigen elektrischen Verbinder zum Herstellen elektrischer Verbindungen zwischen einem Traktor und einem Anhänger. Hierbei ist die Steckrichtung geneigt zur Gerätewand angeordnet. Ferner ist bei dieser Steckverbindung ein Verriegelungsmittel vorgesehen, um die beiden Verbindungspartner miteinander zu verriegeln.

Da die erforderlichen Kabel sowie die bekannten Steckverbinder vergleichsweise voluminös und schwer ausgebildet sind, ist eine Handhabung beim Erstellen der Steckverbindung schwierig. Insbesondere werden bekannte Steckverbinder, um einer Knickbelastung am Steckverbinder aufgrund der durchhängenden Leitungen entgegenzuwirken, in der Regel in einer Steckrichtung längs der Kabelabgangsrichtung schräg bezüglich einer vertikalen Richtung eingesteckt. Die durch das durchhängende Kabel verursachte Zugkraft auf die Steckverbindung kann somit bei unverriegelter Streckverbindung dazu führen, dass die zusammengesteckten Steckverbinder aufgrund von längs der Kabel wirkenden Kräften in Steckrichtung auseinandergezogen werden. Beim Erstellen der Steckverbindung ist somit von einem Benutzer ein erheblicher Kraftaufwand sowie ein koordinativ schwieriges gleichzeitiges Halten und Verriegeln der Steckverbindung zu erbringen. In der Regel ist es daher für einen Benutzer alleine nicht bzw. kaum möglich, die Steckverbindung ohne Hilfe zu erstellen. Nicht zuletzt sind auch die die einzelnen Phasen der Stromversorgung bei bekannten Steckverbindern in einem gemeinsamen Steckverbinder angeordnet, d.h. z.B. 4 Kabel an einem Steckverbinder, womit aufgrund der vergleichsweise steifen und schweren Kabel die Handhabung weiter erschwert wird.

Der Erfindung liegt vor diesem Hintergrund die Aufgabe zugrunde, eine elektrische Verbindungsvorrichtung der eingangs genannten Art zu schaffen, welche die Handhabung der Steckverbinder der Verbindungsvorrichtung beim Zusammenstecken erleichtert, insbesondere das Erstellen einer Steckverbindung durch einen Benutzer alleine ermöglicht. Zudem soll die Zuverlässigkeit der Verbindungsvorrichtung verbessert werden, indem eine Belastung der Steckverbindung am Kabelabgang den Erfordernissen entsprechend gemindert wird.

### Technische Lösung

Die gestellte Aufgabe wird durch eine elektrische Verbindungsvorrichtung zur Stromversorgung von miteinander gekoppelten Waggons von Schienenfahrzeugen, insbesondere Waggons eines Zuges, gemäß Anspruch 1 gelöst. Die elektrische Verbindungsvorrichtung zur Stromversorgung von miteinander gekoppelten Waggons umfasst einen ersten Steckverbinder, an welchem wenigstens ein Kabel angeschlossen ist, und einen korrespondierenden zweiten Steckverbinder, welcher zur Befestigung an einer Waggonwand, insbesondere in einer vertikalen Querwand, vorgesehen ist. Dabei sind der erste und der zweite Steckverbinder jeweils mit einem oder mehreren korrespondierenden, in einer Steckrichtung zusammensteckbaren ersten bzw. zweiten Kontaktelementen versehen und das Kabel des ersten Steckverbinders tritt in einer ersten Kabelabgangsrichtung aus dem ersten Steckverbinder aus. Die erste Kabelabgangsrichtung ist dabei gegenüber der Steckrichtung abgewinkelt.

Die erste Kabelangangsrichtung bezeichnet hierbei die Richtung, in welcher das Kabel z.B. aus einem Gehäuse des ersten Steckverbinders heraustritt. Die erste Kabelangangsrichtung bezeichnet somit auch eine Richtung einer Kraftwirkung auf den ersten Steckverbinder, welche durch eine Zugkraft längs des Kabels ausgeübt wird. Die komplementären Kontaktelemente des ersten und des zweiten Steckverbinders sind dabei zumindest in einem Steckbereich in Steckrichtung ausgerichtet. Indem die Steckrichtung gegenüber der ersten Kabelabgangsrichtung abgewinkelt ist, kann vermieden werden, dass eine Zugkraft längs des Kabels ein Abziehen des ersten Steckverbinders von dem zweiten Steckverbinder zur Folge hat. Der erste Steckverbinder kann somit problemlos mit dem zweiten Steckverbinder vorläufig zusammengesteckt werden, wobei längs des Kabels wirkende Zugkräfte vom zweiten Steckverbinder aufgenommen und abgeführt werden, ohne dass das Risiko eines Abziehens der vorläufig zusammengesteckten Steckverbinder besteht. Da die relevanten Zugkräfte längs des Kabels, d.h. in der ersten Kabelabgangsrichtung, in einem Winkel zur Steckrichtung wirken, wird bevorzugt eine Halterungsvorrichtung zur vorläufigen Sicherung des ersten Steckverbinders am zweiten Steckverbinder bereitgestellt.

Die Halterungsvorrichtung ist dabei bevorzugt derart ausgebildet, dass der erste Steckverbinder beim Zusammenstecken mit dem zweiten Steckverbinder an diesem gegenüber Kräften, welche in der ersten Kabelabgangsrichtung wirken, abgestützt ist. Die Abstützung erfolgt dabei bevorzugt derart, dass ein Zusammenstecken in Steckrichtung durch die Halterungsvorrichtung nicht oder nur geringfügig behindert wird. Die Halterungsvorrichtung umfasst hierzu komplementäre Halterungsmittel am ersten und am zweiten Steckverbinder, welche beim Zusammenstecken und in einem vorläufig zusammengesteckten Zustand zusammenwirken, wenigstens bis eine endgültige Verriegelung der Steckverbindung erstellt ist. Eine Rastvorrichtung ist vorgesehen, welche beim Zusammenstecken eine vorläufige Verrastung des ersten Steckverbinders und des zweiten Steckverbinders in Steckrichtung ermöglicht, um allfälligen in Steckrichtung wirkenden Abzugskräften entgegenzuwirken. Die vorgenannte Halterungsvorrichtung und die Rastvorrichtung umfassen gemeinsame Komponenten.

Die abgewinkelte Ausrichtung der Steckrichtung zur ersten Kabelabgangsrichtung hat zudem den Vorteil, dass auch Zugkräfte auf das Kabel, welche nicht längs des Kabels wirken, die Steckverbindung nicht bzw. kaum lösen können, da aufgrund des abgewinkelten Kabelabgangs die resultierenden Kräfte aufgrund der nicht koaxial zur Steckrichtung wirkenden Kräfte ein Abziehen erschweren. Die vorgenannte Halterungsvorrichtung kann dabei derart ausgebildet sein, dass aufgrund der in diesem Fall zwar parallel aber nicht koaxial zur Steckrichtung wirkenden Zugkraftkomponenten eine Verkeilung der Halterungsmittel erfolgt, welche ein Abziehen in Steckrichtung verhindert.

Die erste Kabelabgangsrichtung ist senkrecht zur Steckrichtung. Damit kann erreicht werden, dass keine Komponente einer Kraftwirkung längs des Kabels in Richtung der Steckrichtung wirkt, d.h. keine Kraftkomponente in Steckrichtung wirkt. Beim Erstellen der Steckverbindung kann somit der erste Steckverbinder und der zweite Steckverbinder zusammengesteckt werden, ohne dass eine Zugkraft längs des Kabels, z.B. aufgrund dessen Gewichts, den ersten Steckverbinder vom zweiten Steckverbinder abziehen kann. Die Steckverbindung kann somit ohne Manipulation des Benutzers aufrechterhalten werden, ohne dass eine Verriegelung erstellt wurde bzw. kann die Verrieglung erstellt werden, ohne dass ein Benutzer gleichzeitig ein Abziehen des ersten Steckverbinders verhindern muss. Nicht zuletzt kann aufgrund der senkrecht abgewinkelten Anordnung der Steckrichtung zur ersten Kabelabgangsrichtung die gesamte Verbindungsvorrichtung auch vergleichsweise kompakt ausgebildet werden, womit ein geringerer Platzbedarf im montierten Zustand verbunden ist.

In der elektrischen Verbindungsvorrichtung sind auch ein oder mehrere Kabel an den zweiten Steckverbinder angeschlossen, welche in einer zweiten Kabelabgangsrichtung von diesem abgehen. In diesem Fall ist auch die zweite Kabelabgangsrichtung des Kabels des zweiten Steckverbinders gegenüber der Steckrichtung abgewinkelt. Die zweite Kabelabgangsrichtung ist senkrecht zur Steckrichtung abgewinkelt.

Damit können die erste und zweite Kabelabgangsrichtung in dieselbe Richtung weisen, womit in zusammengestecktem Zustand der Verbindungsvorrichtung eine 180° Umkehr der Kabelführung bzw. des Leistungsstranges (Kabel des zweiten Steckverbinders relativ zum Kabel des ersten Steckverbinders) ermöglicht wird, was unter anderem eine kompakte Bauweise der Verbindungsvorrichtung erlaubt.

Die elektrische Verbindungsvorrichtung ist derart ausgebildet, dass die erste Kabelabgangsrichtung in zusammengesteckten Zustand des ersten und des zweiten Steckverbinders nahezu parallel bzw. parallel zu einer Befestigungsebene ausgerichtet ist, in welcher der zweite Steckverbinder zur Befestigung an einer Waggonwand vorgesehen ist. Die Befestigungsebene ist weitgehend parallel zu einer Montagefläche ausgerichtet. Insbesondere bei einer vertikalen Ausrichtung der Befestigungsebene können aufgrund der abgewinkelten Steckrichtung auf diese Weise längs des Kabels wirkende Zugkräfte optimal abgeführt werden, z.B. über eine optionale Halterungsvorrichtung, welche den ersten Steckverbinder gegenüber Kräften in Richtung der Kabelabgangsrichtung am zweiten Steckverbinder abstützt. In diesem Fall kann das Kabel somit über den ersten Steckverbinder beim Erstellen der Steckverbindung und vor einer Verrieglung über die Halterungsvorrichtung quasi am zweiten Steckverbinder aufgehängt werden. Die parallele Ausrichtung der ersten Kabelabgangsrichtung erlaubt auch eine kompakte Anordnung der Verbindungsvorrichtung am Waggon. Dies kann insbesondere vorteilhaft sein, wenn auch am zweiten Steckverbinder Kabel angeschlossen sind, welche in der zweiten Kabelabgangsrichtung vom zweiten Steckverbinder abgehen und die zweite Kabelabgangsrichtung wie oben beschrieben ebenfalls parallel zur Befestigungsebene bzw. zur ersten Kabelabgangsrichtung ausgerichtet ist.

Bevorzugt umfasst die elektrische Verbindungsvorrichtung eine Verriegelungsvorrichtung, mit welcher der erste Steckverbinder in eingestecktem Zustand an dem zweiten Steckverbinder verriegelt werden kann. Die Verriegelungsvorrichtung kann dabei als Verriegelungshebel, z.B. am ersten Steckverbinder, ausgebildet sein, welcher zur Verriegelung z.B. durch Umlegen des Hebels mit Eingriffsmitteln in korrespondierende Eingriffsmittel am zweiten Steckverbinder eingreift. Bevorzugt ist die Verriegelungsvorrichtung als Schraubvorrichtung ausgebildet, welche eine Verschraubung des ersten Steckverbinders mit dem zweiten Steckverbinder erlaubt. Beispielsweise kann eine Schraubmuffe des ersten Steckverbinders mit einem Gewinde des zweiten Steckverbinders verschraubt werden. Bevorzugt erlaubt die Schraubvorrichtung allerdings das direkte Verschrauben eines Gehäuses des ersten Steckverbinders an einem Gehäuse des zweiten Steckverbinders. Die Schraubvorrichtung kann dabei z.B. eine Verschraubung an vier Punkten bereitstellen. Bevorzugt umfasst die Verschraubung jedoch nur eine Diagonalverschraubung an 2 Punkten.

In einem montierten Zustand der elektrischen Verbindungsvorrichtung ist der zweite Steckverbinder bevorzugt derart zur Befestigung an der Waggonwand vorgesehen, dass die Steckrichtung im Wesentlichen horizontal verläuft und die erste Kabelabgangsrichtung im Wesentlichen in vertikaler Richtung nach unten ausgerichtet ist. Bevorzugt ist in diesem Fall eine Befestigungsebene des zweiten Steckverbinders im Wesentlichen vertikal ausgerichtet. Die horizontale Richtung sowie die vertikale Richtung definieren sich über die Richtung einer Schwerkraftwirkung. In diesem Fall kann der erste Steckverbinder einfach mit dem zweiten Steckverbinder zusammengesteckt werden, ohne dass das herabhängende Kabel ein Abziehen des ersten Steckverbinders zur Folge haben kann.

Der zweite Steckverbinder ist als integrale Montageeinheit zum Anschluss von mehreren, insbesondere gleichartigen, ersten Steckverbindern ausgebildet. Eine integrale Montageeinheit bezeichnet hierbei z.B. eine Unterbringung der Komponenten des zweiten Steckverbinders in einem gemeinsamen Gehäuse. In diesem Fall umfasst der zweite Steckverbinder mehrere z.B. Kontaktbuchsen als zweite Kontaktelemente, welche jeweils zum Einstecken eines z.B. als Kontaktstift ausgebildeten ersten Kontaktelements eines ersten Steckverbinders ausgebildet sind. Bevorzugt ist der zweite Steckverbinder in diesem Fall derart ausgebildet, dass die mehreren ersten Steckverbinder horizontal nebeneinander angeordnet mit dem zweiten Steckverbinder zusammengesteckt werden können.

Mehrere separate erste Steckverbinder sind vorhanden, welche separat mit dem zweiten Steckverbinder zusammensteckbar und separat an diesem verriegelbar sind. Beispielsweise kann für jede Phase der Stromversorgung ein einzelner erster Steckverbinder vorgesehen sein, der mit einem Kabel zur Stromführung der entsprechenden Phase versehen ist. Damit kann die Handhabung der Verbindungsvorrichtung weiter vereinfacht werden, da beim Erstellen der Steckverbindung nacheinander jeweils nur ein erster Steckverbinder mit vergleichsweise geringer Abmessung und nur einem angeschlossenen Kabel eingesteckt und verriegelt zu werden braucht.

In einer bevorzugten Ausführungsform umfasst der zweite Steckverbinder wenigstens ein Befestigungselement zur Befestigung des zweiten Steckverbinders an einer Montagefläche einer Waggonwand. Während das Befestigungsmittel eine einfache Verschraubung bereitstellen kann, über welche z.B. ein Gehäuse des zweiten Steckverbinders direkt an eine Montagefläche z.B. einer Querwand des Waggons geschraubt werden kann, umfasst das Befestigungselement bevorzugt ein Montageprofil, mit welchem das Gehäuse des zweiten Steckverbinders in einem Abstand zu der Montagefläche, bevorzugt parallel zu dieser, befestigt werden kann. Das Montageprofil kann dabei derart ausgebildet sein, dass der Abstand ausreicht, um z.B. Kabel zwischen dem Gehäuse des zweiten Steckverbinders und der Montagefläche an der Querwand des Waggons hindurchzuführen. Zudem kann das Montageprofil derart ausgebildet sein, dass die Befestigungsebene des zweiten Steckverbinders und damit z.B. die Steckrichtung bezüglich der Montagefläche ausgerichtet werden kann. Bevorzugt ist die Befestigungsebene parallel zur Montagefläche ausgerichtet.

Die vorliegende Erfindung betrifft auch ein Schienenfahrzeug, umfassend wenigstens zwei gekoppelte Waggons, wobei jeder der zwei gekoppelten Waggons mit wenigstens einer der hier beschriebenen elektrischen Verbindungsvorrichtung versehen ist. Dabei ist an jedem der gekoppelten Waggons jeweils ein zweiter Steckverbinder an jeweils einer Waggonwand befestigt. Jeweils ein erster Steckverbinder ist mit den zweiten Steckverbindern zusammengesteckt, wobei die ersten Steckverbinder über das angeschlossene Kabel miteinander verbunden sind. Die Waggonwände sind bevorzugt einander zugewandte Querwände der gekoppelten Waggons und die ersten Kabelabgangsrichtungen der ersten Steckverbinder sind bevorzugt im Wesentlichen vertikal nach unten ausgerichtet. Die Steckrichtungen der beiden elektrischen Verbindungsvorrichtungen sind bevorzugt im Wesentlichen horizontal ausgerichtet.

Eine exemplarische Ausführungsform der elektrischen Verbindungsvorrichtung gemäß der vorliegenden Erfindung ist nachfolgend anhand von Figuren beschrieben.

### Kurzbeschreibung der Figuren

Die Figuren zeigen schematisch:
- Fig. 1:: eine elektrische Verbindungsvorrichtung gemäß der vorliegenden Erfindung in einer Außenansicht;
- Fig. 2:: eine Frontalansicht auf eine Anschlussseite eines zweiten Steckverbinders der elektrischen Verbindungsvorrichtung der Fig. 1;
- Fig. 3:: eine Schnittansicht durch die Verbindungsvorrichtung der Fig. 1 in einer Schnittebene S;
- Fig. 4:: eine Schnittansicht in der Schnittebene S eines ersten Steckverbinders und des zweiten Steckverbinders in nicht zusammengestecktem Zustand;
- Fig. 5:: die Verbindungsvorrichtung wie in Fig. 3 ohne Gehäuse des ersten und des zweiten Steckverbinders.

Gleiche Bezugszeichen bezeichnen im Allgemeinen gleiche bzw. gleichartige Komponenten, sofern nichts anderes vermerkt ist.

### Ausführungsformen

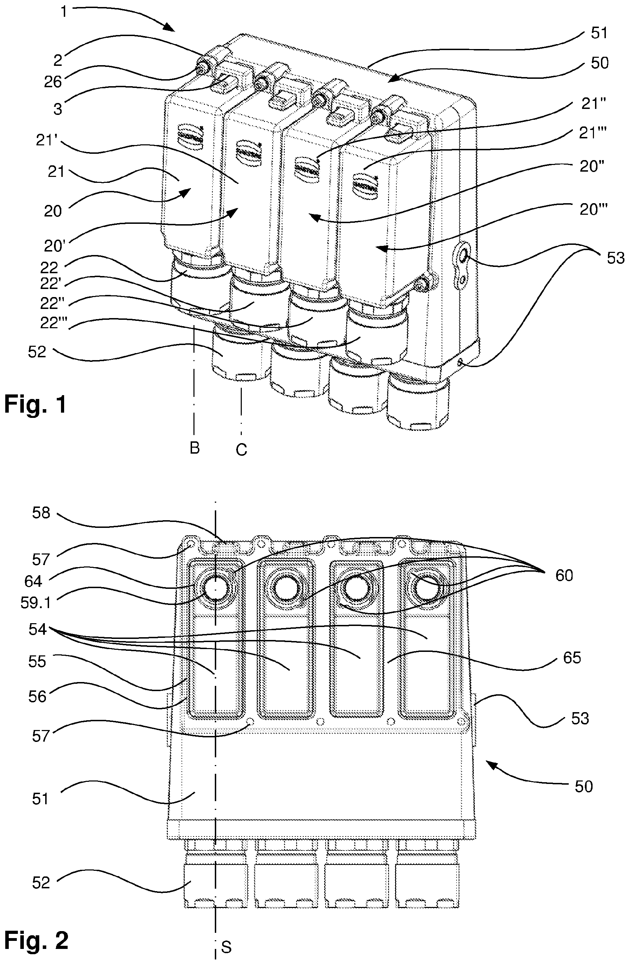

Figur 1 zeigt eine elektrische Verbindungsvorrichtung 1 gemäß der vorliegenden Erfindung in einer Außenansicht. Vier erste Steckverbinder 20, 20', 20", 20‴ sind mit einem als integrale Einheit ausgebildeten zweiten Steckverbinder 50 zusammengesteckt. Die ersten Steckverbinder 20, 20', 20", 20‴ sind im zusammengesteckten Zustand mit einer Anschlussseite 65 des zweiten Steckverbinders 50 verbunden. Die ersten Steckverbinder 20, 20', 20", 20‴ sind im Wesentlichen gleichartig ausgebildet und umfassen jeweils ein separates Gehäuse 21, 21', 21", 21‴, an welchem in einer Kabelabgangsrichtung B elektromagnetisch verträgliche (EMV) Kabelverschraubungen 22, 22', 22", 22‴ zum Anschluss jeweils eines Kabels (nicht dargestellt) angeordnet sind. Da die ersten Steckverbinder 20, 20', 20", 20‴ im Wesentlichen gleichartig sind, ist im Folgenden exemplarisch nur der erste Steckverbinder 20 im Detail beschrieben.

Das Gehäuse 21 des ersten Steckverbinders 20 ist mit einem Gehäuse 51 des zweiten Steckverbinders 50 über eine als Verriegelungsvorrichtung 2 dienende Verschraubung fest verschraubt. Weiter ist eine Halterungsvorrichtung 3 vorhanden, welche vorliegend eine Rastvorrichtung umfasst, welche den ersten Steckverbinder 20 beim Zusammenstecken mit dem zweiten Steckverbinder 50 gegen ein Abziehen vorläufig sichert, bevor die Verriegelung durch die Verriegelungsvorrichtung 2 erstellt ist (siehe unten). Die Gehäuse 21 und 51 sind dabei in elektrisch leitendem Kontakt, um eine ausreichende Abschirmung gewährleisten.

Das Gehäuse 51 des zweiten Steckverbinders 50 weist Befestigungselemente 53 zur Befestigung an einem Montageprofil (nicht dargestellt) auf. Weiter umfasst das Gehäuse 51 des zweiten Steckverbinders 50 in einer zweiten Kabelabgangsrichtung C vier EMV Kabelverschraubungen 52 zum Anschluss jeweils eines Kabels (nicht dargestellt) auf. Im zusammengesteckten Zustand des ersten Steckverbinders 20 und des zweiten Steckverbinders 50 wie in Fig. 1 dargestellt, sind die erste und zweite Kabelabgangsrichtung B bzw. C parallel zueinander ausgerichtet. Insbesondere sind die erste und zweite Kabelabgangsrichtung B bzw. C auch parallel zu einer Befestigungsebene E des zweiten Steckverbinders 50 ausgerichtet. Die Befestigungsebene E ist dabei vorliegend als eine Hauptebene des zweiten Steckverbinders 50 definiert, zu welcher die Anschlussseite 65 weitgehend parallel ausgerichtet ist. Die Befestigungsebene E ist dabei in der Regel im Wesentlichen parallel zu einer Montagefläche ausgerichtet, an welcher der zweite Steckverbinder 50 in betriebsbereitem Zustand montiert ist (nicht dargestellt). Vorliegend wird die Verbindungsvorrichtung 1 anhand einer Ausrichtung der Befestigungsebene E in vertikaler Richtung beschrieben, wobei die Kabelabgangsrichtungen B und C ebenfalls vertikal und nach unten ausgerichtet sind.

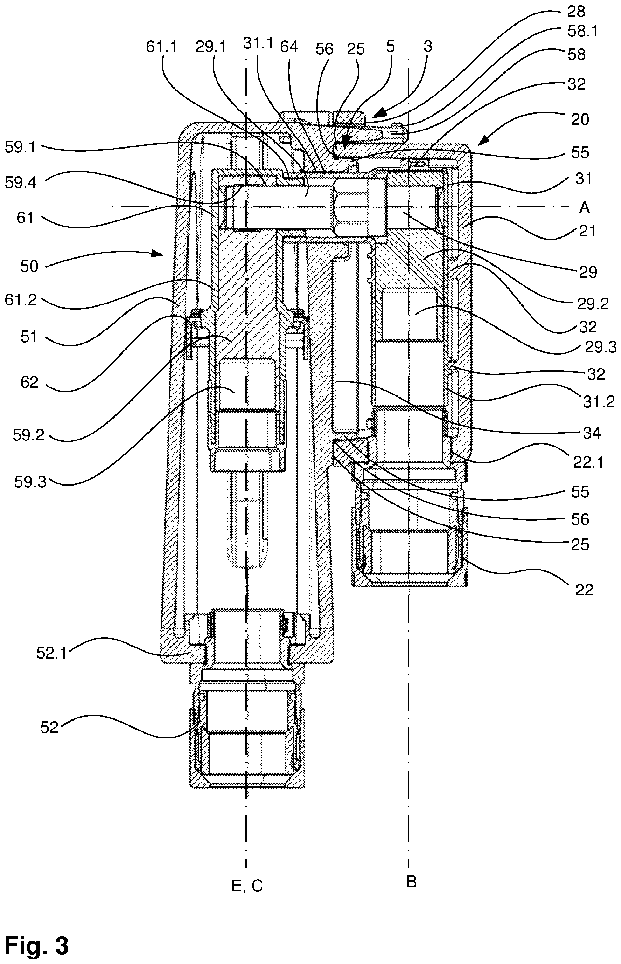

Figur 2 zeigt eine Frontalansicht auf die Anschlussseite 65 des zweiten Steckverbinders 50. Das Gehäuse 51 weist an der Anschlussseite 65 vier Anschlusssockel 54 für jeweils einen ersten Steckverbinder 20 auf. Die Anschlusssockel 54 sind im Wesentlichen in einer Ebene parallel zu der Befestigungsebene E angeordnet. Jeder Anschlusssockel 54 weist einen Sockelrand 55 auf, welcher in zusammengestecktem Zustand von einem Anschlussrand 25 des Gehäuses 21 des ersten Steckverbinders 20 umfasst ist. Der Anschlussrand 25 begrenzt dabei eine Anschlussöffnung 34 des ersten Steckverbinders 20. Am Sockelrand 55 ist außen umlaufend eine Dichtung 56 vorgesehen, welche in zusammengestecktem Zustand zwischen dem Sockelrand 55 und dem Anschlussrand 25 dichtend eingeklemmt ist und die Anschlussöffnung 34 des Gehäuses 21 gegen die Außenseite des Gehäuses 51 abdichtet (siehe auch Fig. 3).

Innerhalb des Sockelrandes 55 ist in einem oberen Bereich eine Zugangsöffnung 64 angeordnet, durch welche eine im Wesentlichen kreiszylindrische Kontaktbuchse 59.1 im Inneren des zweiten Steckverbinders 50 zugänglich ist. Die Kontaktbuchse 59.1 ist zum Einstecken eines korrespondierenden Kontaktstifts 29.1 des ersten Steckverbinders 20 vorgesehen. Eine Zylinderachse der Kontaktbuchse 59.1 definiert dabei eine Steckrichtung A, welche senkrecht zur Befestigungsebene E ausgerichtet ist. Die Steckrichtung A ist zudem senkrecht zur ersten Kabelabgangsrichtung B sowie zur zweiten Kabelabgangsrichtung C ausgerichtet.

Der Kontaktstift 29.1 und die Kontaktbuchse 59.1 bilden dabei Komponenten eines ersten Kontaktelements 29 des ersten Steckverbinders 20 bzw. eines zweiten Kontaktelements 59 des zweiten Steckverbinders 50 der Verbindungsvorrichtung 1.

An der Zugangsöffnung 64 sind jeweils unterschiedlich ausgebildete Kodierungselemente 60 angeordnet, welche nur das Einstecken eines für die jeweilige Kontaktbuchse 59.1 vorgesehenen ersten Steckverbinders 20 erlauben. Vorliegend sind die Kodierungselemente 60 als Einkerbungen ausgebildet, welche an unterschiedlichen Positionen an einem Umfang der Zugangsöffnungen 64 angeordnet sind. Zu jedem der vier Anschlusssockel 54 ist an einer Unterseite des Gehäuses 51 korrespondierend eine der vier Kabelverschraubungen 52 angeordnet. Das Gehäuse 51 weist weiter Schraubbohrungen 57 für Verriegelungsschrauben 26 auf, welche zusammen die Verschraubung 2 der Verriegelungsvorrichtung bereitstellen. Zudem ist oberhalb des Anschlusssockels 54 ein, in Steckrichtung A vorstehender Rastarm 58 vorhanden, welcher in zusammengestecktem Zustand mit einer Rastöse 28 des ersten Steckverbinders 20 als Halterungsvorrichtung 3 insbesondere während des Erstellens der Steckverbindung zusammenwirkt. Der erste Steckverbinder 20 kann dabei über die Rastöse 28 am Rastarm 58 aufgehängt werden, womit etwaige Zugkräfte in Kabelabgangsrichtung B über das Gehäuse 21 des ersten Steckverbinders 20 auf das Gehäuse 51 des zweiten Steckverbinders 50 abgeführt werden können. Der erste Steckverbinder 20 kann somit in einem vorläufig eingesteckten Zustand am zweiten Steckverbinder 50 aufgehängt werden und in Steckrichtung A verschoben werden, sodass der erste Steckverbinder 20 und der zweite Steckverbinder 50 problemlos zusammengesteckt werden können und die Verriegelung 2 erstellt werden kann, welche die Steckverbindung endgültig sichert. Der Rastarm 58 kann dabei eine Rastnase 58.1 aufweisen, welche als zusätzliche Rastvorrichtung wirkt und verhindert, dass der erste Steckverbinder 20 bzw. dessen Rastöse 28 vom Rastarm 58 in Steckrichtung A abgezogen werden kann.

Figur 3 zeigt eine Schnittansicht durch die Steckverbindungsvorrichtung 1 in einer Schnittebene S, wie sie in Fig. 2 eingezeichnet ist. Die Schnittebene S ist dabei senkrecht zur Befestigungsebene E und parallel zu den Kabelabgangsrichtungen B und C angeordnet. Die Steckrichtung A ist somit parallel bzw. in der Schnittebene S angeordnet.

Das Gehäuse 21 des ersten Steckverbinders 20 ist in der Schnittebene S länglich ausgebildet, wobei eine Längsrichtung der Kabelabgangsrichtung B entspricht. Seitlich, in Steckrichtung A, ragt aus dem Gehäuse 21 der Kontaktstift 29.1 des ersten Steckverbinders 20 durch die Anschlussöffnung 34. Der Kontaktstift 29.1 ist dabei koaxial teilweise innerhalb einer ebenfalls längs der Steckrichtung A ausgerichteten Isolationshülse 31.1 eines Isolationskörpers 31 angeordnet. Die Isolationshülse 31.1 ragt dabei derart weit in Steckrichtung A aus dem Steckverbinder 20 hervor, dass in zusammengestecktem Zustand ein Überlapp mit einer korrespondierenden Isolationshülse 61.1 eines Isolationskörpers 61 des zweiten Steckverbinders 50 besteht (siehe unten).

Der Isolationskörper 31 weist einen längs der Kabelabgangsrichtung B ausgerichteten, weitgehend rohrförmigen Abschnitt 31.2 innerhalb des Gehäuses 21 auf. Die stromführenden Komponenten des Steckverbinders 20 sind im Isolationskörper 31 gegenüber dem Gehäuse 21 elektrisch isoliert geführt.

Innerhalb des Isolationskörpers 31 ist der Kontaktstift 29.1 elektrisch leitend mit einem Verbindungselement 29.2 des Kontaktelements 29 rechtwinklig verbunden. Das Verbindungselement 29.2 ist längs der Kabelangangsrichtung B im rohrförmigen Abschnitt 31.2 des Isolationskörpers 31 angeordnet. Der Kontaktstift 29.1 ist dabei in eine rechtwinklig zur Kabelabgangsrichtung B angeordnete Bohrung des Verbindungselements 29.2 eingesetzt. Ein über die erste Kabelverschraubung 22 an den ersten Steckverbinder 20 angeschlossenes Kabel (nicht dargestellt) ist innerhalb des Isolationskörpers 31 elektrisch leitend mit dem Verbindungselement 29.2 in Richtung der ersten Kabelabgangsrichtung B verbunden. Das Verbindungselement 29.2 weist hierzu einen Crimp-Bereich 29.3 auf. Der Isolationskörper 31 ist innerhalb des Gehäuses 21 über Verrastungen 32 fixiert. Die erste Kabelverschraubung 22 ist mit einem Außengewinde 22.1 direkt in ein Innengewinde einer entsprechenden Zugangsöffnung des Gehäuses 21 eingeschraubt.

Das Gehäuse 51 des zweiten Steckverbinders 50 ist in der Schnittebene S länglich ausgebildet, wobei eine Längsrichtung der Kabelabgangsrichtung C entspricht und in der Befestigungsebene E liegt. Seitlich, in Steckrichtung A, weist das Gehäuse 51 die Zugangsöffnung 64 auf, durch welche der Kontaktstift 29.1 des ersten Steckverbinders 20 in die Kontaktbuchse 59.1 des zweiten Kontaktelements 59 eingesteckt ist. Die Zugangsöffnung 64 ist dabei derart bemessen, dass die Isolationshülse 31.1 des Isolationskörpers 31 in das Gehäuse 51 ragen kann. Die Kontaktbuchse 59.1 ist als seitliche Bohrung in einem Verbindungselement 59.2 des zweiten Kontaktelements 59 ausgebildet. Die Kontaktbuchse 59.1 bildende Bohrung ist dabei rechtwinklig zur Kabelabgangsrichtung C und in Steckrichtung A im Verbindungselement 59.2 ausgebildet. In der Kontaktbuchse 59.1 ist in einer innenseitig umlaufenden Vertiefung ein federnder Kontaktring 59.4 angeordnet, welcher einen umfangsseitigen elektrisch leitenden Kontakt zwischen dem Kontaktstift 29.1 und der Kontaktbuchse 59.1 sicherstellt.

Das Kontaktelement 59 ist innerhalb eines Isolationskörpers 61 des zweiten Steckverbinders 50 angeordnet, welcher die stromführenden Komponenten gegenüber dem Gehäuse 51 elektrisch isoliert. Der Isolationskörper 61 ist über Haltebleche 62 innenseitig am Gehäuse 51 befestigt. Der Isolationskörper 61 weist einen koaxial zur Kabelabgangsrichtung C angeordneten rohrförmigen Abschnitt 61.2 auf. Im Bereich der Kontaktbuchse 59.1 weist der Isolationskörper 61 eine Isolationshülse 61.1 auf, welche koaxial zur Steckrichtung A, d.h. in rechtem Winkel zur Kabelabgangsrichtung C, vom rohrförmigen Abschnitt 61.2 zur Zugangsöffnung 64 ragt. Die Isolationshülse 61.1 ist im zusammengesteckten Zustand von der Isolationshülse 31.1 des ersten Steckverbinders 20 umgriffen, während die Isolationshülse 61.1 den Kontaktstift 29.1 umgreift.

Ein über die zweite Kabelverschraubung 52 an den zweiten Steckverbinder 50 angeschlossenes Kabel (nicht dargestellt) ist innerhalb des Isolationskörpers 61 elektrisch leitend mit dem Verbindungselement 59.2 in Richtung der zweiten Kabelabgangsrichtung C verbunden. Das Verbindungselement 59.2 weist hierzu einen Crimp-Bereich 59.3 auf. Die zweite Kabelverschraubung 52 ist mit einem Außengewinde 52.1 direkt in ein Innengewinde einer entsprechenden Zugangsöffnung des Gehäuses 51 eingeschraubt.

In einem vorläufig eingesteckten Zustand, d.h. bevor die Verriegelung 2 erstellt wurde, ist der erste Steckverbinder 20 über sein Gehäuse 21 am Gehäuse 51 des zweiten Steckverbinders 50 derart abgestützt, dass allfällige Zugkräfte z.B. längs der Kabelabgangsrichtung B über das Gehäuse 51 abgeführt werden können. Hierzu ist der erste Steckverbinder 20 vorliegend über den Anschlussrand 25 am Sockelrand 55 abgestützt. Den Anschlussrand 25 zusammen mit dem Sockelrand 55 bilden somit eine weitere Halterungsvorrichtung 5 im vorliegenden Sinne. Zudem ist der erste Steckverbinder 20 zusätzlich über die Halterungsvorrichtung 3, d.h. über die Rastöse 28 und den Rastarm 58, am Gehäuse 51 des zweiten Steckverbinders 50 aufgehängt. Es versteht sich, dass zahlreiche andere Möglichkeiten zur Ausbildung einer Sicherheitsvorrichtung bestehen, welche den ersten Steckverbinder 20 in einem vorläufig eingesteckten Zustand am zweiten Steckverbinder 50 in Richtung der ersten Kabelabgangsrichtung B abstützt.

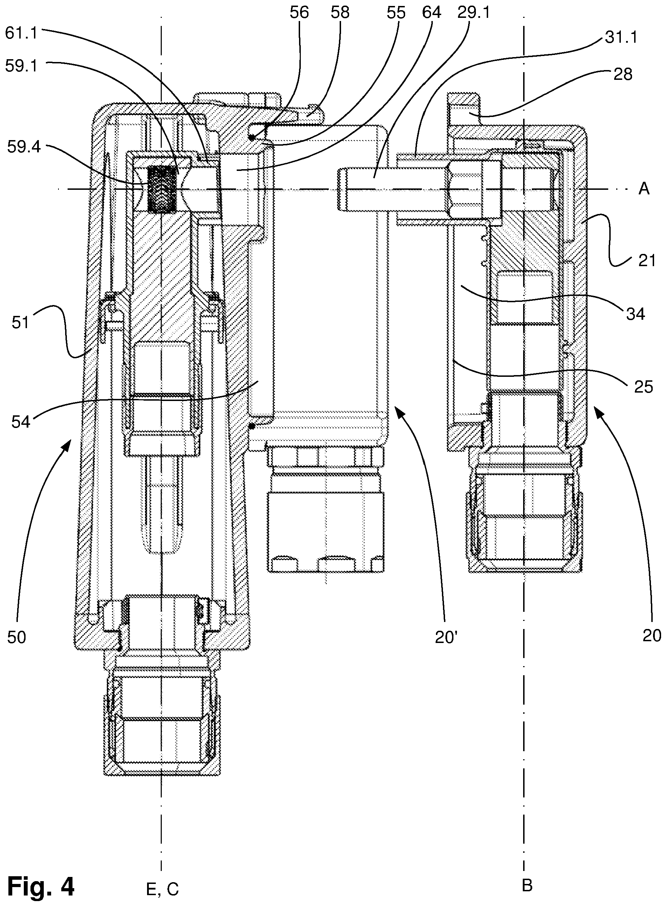

Figur 4 zeigt den ersten Steckverbinder 20 und den zweiten Steckverbinder 50 in nicht zusammengestecktem Zustand. Für eine Beschreibung der Komponenten wird auf die Beschreibung der Fig. 3 verwiesen. Im Hintergrund ist in Fig. 4 der weitere erste Steckverbinder 20' zu erkennen, welcher mit dem zweiten Steckverbinder 50 zusammengesteckt ist.

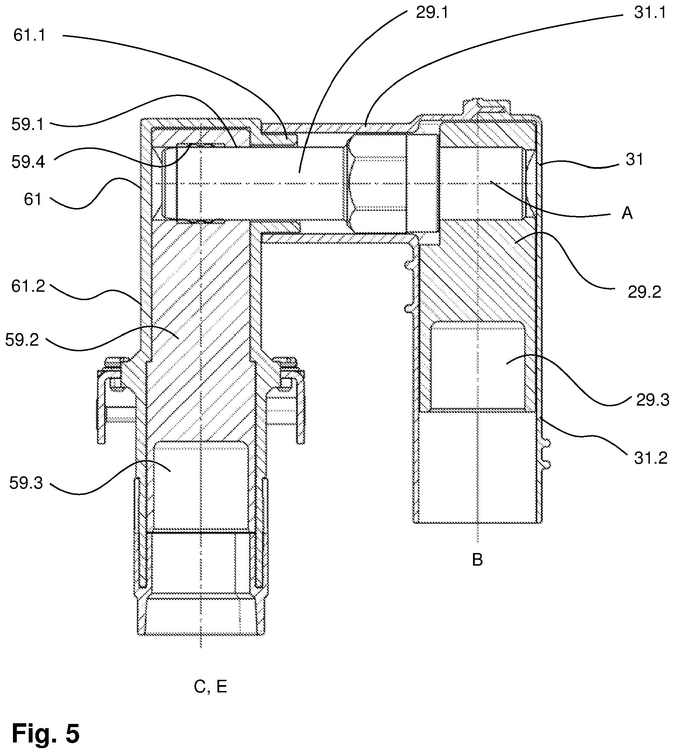

Figur 5 zeigt die Verbindungsvorrichtung 1 wie in Fig. 3 dargestellt, wobei zur besseren Übersicht auf eine Darstellung des Gehäuses 21 und des Gehäuses 51 sowie der Kabelverschraubungen 22 und 52 verzichtet wurde. Für eine Beschreibung der Komponenten wird auf die Beschreibung der Fig. 3 verwiesen.

Die Vorteile der vorliegenden Erfindung erschließen sich unmittelbar: Ausgehend von der Anordnung der Fig. 4 kann der erste Steckverbinder 20 in Steckrichtung A in den zweiten Steckverbinder 50 eingesteckt werden. Dabei wird der Kontaktstift 29.1 in die Kontaktbuchse 59.1 eingeführt. Indem die Kabelabgangsrichtung B des ersten Steckverbinders 20 senkrecht zur Steckrichtung A angeordnet ist, wird unmittelbar offenbar, dass der erste Steckverbinder 20 durch eine Zugwirkung in Richtung von B, d.h. im vorliegenden Fall nach unten, nicht aus dem zweiten Steckverbinder 50 abgezogen werden kann. D.h. das Gewicht des in Kabelabgangsrichtung B aus dem ersten Steckverbinder abgehenden Kabels kann den ersten Steckverbinder 20 nicht aus dem zweiten Steckverbinder 50 abziehen. Die somit erstellte vorläufige Steckverbindung kann nun verriegelt werden indem über die Verriegelungsvorrichtung 2 die Verschraubung erstellt wird. Dabei hat der zuständige Benutzer beide Hände frei, da die Verbindungsvorrichtung 1 gemäß der vorliegenden Erfindung ein Herausfallen bzw. ein Abziehen verhindert.

Gleichzeitig mit dem Einführen des Kontaktstifts 29.1 in die Kontaktbuchse 59.1 gelangt vorliegend auch der Rastarm 58 mit der Rastöse 28 der Halterungsvorrichtung 3 zum Eingriff. Damit wird eine zusätzliche vorläufige Sicherung erstellt, welche den ersten Steckverbinder 20 am zweiten Steckverbinder 50 in Richtung B unterstützt und durch die Rastnase 58.1 gegen ein Abziehen des ersten Steckverbinders 20 sichert, bis eine Verriegelung erstellt ist.

In dem die ersten Steckverbinder 20, 20', 20" und 20‴ als separate Steckverbinder ausgebildet sind, kann jede der vier Phasen der Stromversorgung separat mit dem zweiten Steckverbinder 50 zusammengesteckt werden, was die Handhabung weiter vereinfacht.

### Bezugszeichenliste

- 1: Verbindungsvorrichtung

- 2: Verriegelungsvorrichtung
- 20,20', 20",20‴: erster Steckverbinder
- 21,21', 21",21‴: Gehäuse
- 22,22', 22",22‴: Kabelverschraubung
- 22.1: Außengewinde

- 25: Anschlussrand
- 26: Verriegelungsschraube
- 28: Rastöse

- 29: Kontaktelement
- 29.1: Kontaktstift
- 29.2: Verbindungselement
- 29.3: Crimp-Bereich

- 3: Haltevorrichtung
- 31: Isolationskörper
- 31.1: Isolationshülse
- 31.2: rohrförmiger Abschnitt

- 32: Verrastung
- 34: Anschlussöffnung

- 5: Haltevorrichtung
- 50: zweiter Steckverbinder
- 51: Gehäuse
- 52: Kabelverschraubung
- 53: Befestigungselement
- 54: Anschlusssockel
- 55: Sockelrand
- 56: Dichtung
- 57: Schraubbohrung

- 58: Rastarm
- 58.1: Rastnase

- 59: Kontaktelement
- 59.1: Kontaktbuchse
- 59.2: Verbindungselement
- 59.3: Crimp-Bereich
- 59.4: Kontaktring

- 60: Kodierungselement
- 61: Isolationskörper
- 61.1: Isolationshülse

- 62: Haltebleche
- 64: Zugangsöffnung
- 65: Anschlussseite

- A: Steckrichtung
- B: Kabelabgangsrichtung
- C: Kabelabgangsrichtung
- E: Befestigungsebene
- S: Schnittebene

## Patentansprüche

1. Elektrische Verbindungsvorrichtung (1) zur Stromversorgung von miteinander gekoppelten Waggons von Schienenfahrzeugen mit einem ersten Steckverbinder (20, 20', 20", 20‴), an welchem wenigstens ein Kabel angeschlossen ist, und einem korrespondierenden zweiten Steckverbinder (50), welcher zur Befestigung an einer Waggonwand vorgesehen ist, wobei der erste Steckverbinder (20, 20', 20", 20‴) und der zweite Steckverbinder (50) jeweils mit einem oder mehreren korrespondierenden, in einer Steckrichtung (A) zusammensteckbaren, ersten Kontaktelementen (29) bzw. zweiten Kontaktelementen (59) versehen sind und das Kabel des ersten Steckverbinders (20, 20', 20", 20‴) in einer ersten Kabelabgangsrichtung (B) aus dem ersten Steckverbinder (20, 20', 20", 20‴) tritt, wobei der zweite Steckverbinder (50) als integrale Montageeinheit zum Anschluss von mehreren ersten Steckverbindern (20, 20', 20",20‴) ausgebildet ist und wobei mehrere erste Steckverbinder (20, 20', 20", 20‴) vorhanden sind, welche separat mit dem zweiten Steckverbinder (50) zusammensteckbar und an diesem verriegelbar ausgebildet sind,
**dadurch gekennzeichnet, dass,** die erste Kabelabgangsrichtung (B) senkrecht zur Steckrichtung (A) abgewinkelt ist,
dass eine zweite Kabelabgangsrichtung (C) eines Kabels des zweiten Steckverbinders (50) gegenüber der Steckrichtung (A) senkrecht abgewinkelt ist, dass eine Halterungsvorrichtung (3) vorgesehen ist, welche jeden ersten Steckverbinder (20, 20', 20", 20‴) beim Zusammenstecken in Steckrichtung (A) mit dem zweiten Steckverbinder (50) gegenüber Kräften, welche in der ersten Kabelabgangsrichtung (B) wirken, am zweiten Steckverbinder (50) abstützt,
dass die Halterungsvorrichtung (3) aus einer Rastöse (28) und einem Rastarm (58) gebildet ist, wobei der zweite Steckverbinder (50) ein Gehäuse (51) aufweist und das Gehäuse (51) des zweiten Steckverbinders (50) den Rastarm (58) aufweist,
dass die erste Kabelabgangsrichtung (B) in zusammengesteckten Zustand jedes ersten Steckverbinders (20, 20', 20", 20‴) und des zweiten Steckverbinders (50) parallel zu einer Befestigungsebene (E) ausgerichtet ist, in welcher der zweite Steckverbinder (50) zur Befestigung an einer Waggonwand vorgesehen ist.

2. Elektrische Verbindungsvorrichtung (1) nach Anspruch 1 **dadurch gekennzeichnet, dass** eine Verriegelungsvorrichtung (2) vorhanden ist, mit welcher jeder erste Steckverbinder (20, 20', 20", 20‴) in eingestecktem Zustand an dem zweiten Steckverbinder (50) verriegelt werden kann.

3. Elektrische Verbindungsvorrichtung (1) nach Anspruch 2, **dadurch gekennzeichnet, dass** die Verriegelungsvorrichtung (2) als Schraubvorrichtung ausgebildet ist, welche eine Verschraubung jedes ersten Steckverbinders (20, 20', 20", 20‴) mit dem zweiten Steckverbinder (50) erlaubt.

4. Elektrische Verbindungsvorrichtung (1) nach Anspruch 1 wobei der zweite Steckverbinder (50) derart zur Befestigung an der Waggonwand vorgesehen ist, dass die Steckrichtung (A) horizontal verläuft und die erste Kabelabgangsrichtung (B) in vertikaler Richtung nach unten ausgerichtet ist.

5. Elektrische Verbindungsvorrichtung (1) nach Anspruch 1 **dadurch gekennzeichnet, dass** der zweite Steckverbinder (50) wenigstens ein Befestigungselement (53) zur Befestigung des zweiten Steckverbinders (50) an einer Montagefläche einer Waggonwand aufweist.

6. Elektrische Verbindungsvorrichtung (1) nach Anspruch 5, **dadurch gekennzeichnet, dass** das Befestigungselement (53) ein Montageprofil umfasst, mit welchem ein Gehäuse des zweiten Steckverbinders (50) in einem Abstand zu der Montagefläche befestigt werden kann.

7. Schienenfahrzeug, umfassend wenigstens zwei gekoppelte Waggons, wobei jeder der zwei gekoppelten Waggons mit wenigstens einer elektrischen Verbindungsvorrichtung (1) gemäß einem der vorgenannten Ansprüche 1 bis 6 versehen ist, **dadurch gekennzeichnet, dass** an jedem der gekoppelten Waggons jeweils ein zweiter Steckverbinder (50) an jeweils einer Waggonwand befestigt ist und jeweils ein erster Steckverbinder (20, 20', 20", 20‴) mit den zweiten Steckverbindern (50) zusammengesteckt ist, wobei die ersten Steckverbinder (20, 20', 20", 20‴) über das angeschlossene Kabel miteinander verbunden sind.

## Claims

1. Electrical connecting apparatus (1) for supplying power to coupled cars of rail vehicles with a first plug connector (20, 20', 20", 20‴) to which at least one cable is connected and a corresponding second plug connector (50) that is provided for attachment to a car wall, wherein the first plug connector (20, 20', 20", 20''') and the second plug connector (50) are each provided with one or more corresponding first contact elements (29) or second contact elements (59) that can be plugged together in a plugging direction (A) and the cable of the first plug connector (20, 20', 20" , 20‴) emanates from the first plug connector (20, 20', 20", 20‴) in a first cable outlet direction (B), wherein the second plug connector (50) is embodied as an integral assembly unit for connecting a plurality of first plug connectors (20, 20', 20", 20‴), and wherein a plurality of first plug connectors (20, 20', 20", 20‴) is provided that can be separately plugged together with and can be locked to the second plug connector (50), **characterized in that** the first cable outlet direction (B) is angled perpendicularly to the plugging direction (A), **in that** a second cable outlet direction (C) of a cable of the second plug connector (50) is angled relative to the plugging direction (A), **in that** a holding device (3) is provided that supports each first plug connector (20, 20', 20", 20‴) on the second plug connector (50) against forces acting in the first cable outlet direction (B) when plugged together with the second plug connector (50) in the direction (A), **in that** the holding device (3) is formed from a latching lug (28) and a latching arm (58), wherein the second plug connector (50) has a housing (51) and the housing (51) of the second plug connector (50) has the latching arm (58), **in that** in a plugged-together state of each first plug connector (20, 20', 20", 20‴) and the second plug connector (50) the first cable outlet direction (B) is oriented parallel to a fastening plane (E) in which the second plug connector (50) is provided for attachment to a car wall.

2. Electrical connecting apparatus (1) according to Claim 1, **characterized in that** a locking device (2) is provided, with which each first plug connector (20, 20', 20" ,20‴) can be locked to the second plug connector (50) in the plugged-in state.

3. Electrical connecting apparatus (1) according to Claim 2, **characterized in that** the locking device (2) is embodied as a threaded device, which enables a screw connection of each first plug connector (20, 20', 20", 20‴) to the second plug connector (50).

4. Electrical connecting apparatus (1) according to Claim 1, wherein the second plug connector (50) is provided for attachment to the car wall in such a way that the plugging direction (A) runs horizontally and the first cable outlet direction (B) is oriented vertically downwards.

5. Electrical connecting apparatus (1) according to Claim 1, **characterized in that** the second plug connector (50) has at least one fastening element (53) for attaching the second plug connector (50) to an assembly surface of a car wall.

6. Electrical connecting apparatus (1) according to Claim 5, **characterized in that** the fastening element (53) comprises an assembly profile with which a housing of the second plug connector (50) can be attached at a distance from the assembly surface.

7. Rail vehicle, comprising at least two coupled cars, wherein each of the two coupled cars is provided with at least one electrical connecting apparatus (1) according to any one of the previous Claims 1 to 6, **characterized in that** on each of the coupled cars a respective second plug connector (50) is fastened to a respective car wall and in each case a first plug connector (20, 20', 20", 20‴) is plugged together with the second plug connectors (50), wherein the first plug connectors (20, 20', 20", 20‴) are connected to each other via the connected cable.

## Revendications

1. Dispositif de connexion électrique (1) pour l'alimentation électrique de wagons accouplés les uns aux autres de véhicules ferroviaires, comprenant un premier connecteur enfichable (20, 20', 20", 20"') auquel est raccordé au moins un câble, et un deuxième connecteur enfichable (50) correspondant qui est prévu pour être fixé à une paroi de wagon, dans lequel le premier connecteur enfichable (20, 20', 20", 20"') et le deuxième connecteur enfichable (50) sont pourvus respectivement d'un ou de plusieurs premiers éléments de contact (29) ou deuxièmes éléments de contact (59) correspondants, pouvant être assemblés dans une direction d'enfichage (A), et le câble du premier connecteur enfichable (20, 20', 20", 20"') sort du premier connecteur enfichable (20, 20', 20", 20"') dans une première direction de sortie de câble (B), dans lequel le deuxième connecteur enfichable (50) est réalisé comme une unité de montage d'un seul tenant pour le raccordement de plusieurs premiers connecteurs enfichables (20, 20', 20", 20"'), et dans lequel plusieurs premiers connecteurs enfichables (20, 20', 20", 20"') sont présents qui peuvent être assemblés séparément avec le deuxième connecteur enfichable (50) et sont réalisés de manière à pouvoir être verrouillés sur celui-ci,
**caractérisé**
**en ce que** la première direction de sortie de câble (B) est coudée perpendiculairement à la direction d'enfichage (A),
**en ce qu'**une deuxième direction de sortie de câble (C) d'un câble du deuxième connecteur enfichable (50) est coudée perpendiculairement par rapport à la direction d'enfichage (A),
**en ce qu'**un dispositif de maintien (3) est prévu qui soutient chaque premier connecteur enfichable (20, 20', 20", 20"') au niveau du deuxième connecteur enfichable (50) lors de l'assemblage dans la direction d'enfichage (A) avec le deuxième connecteur enfichable (50) par rapport à des forces qui agissent dans la première direction de sortie de câble (B),
**en ce que** le dispositif de maintien (3) est formé par un oeillet d'arrêt (28) et un bras d'arrêt (58), dans lequel le deuxième connecteur enfichable (50) présente un boîtier (51), et le boîtier (51) du deuxième connecteur enfichable (50) présente le bras d'arrêt (58),
**en ce que** la première direction de sortie de câble (B) est à l'état assemblé de chaque premier connecteur enfichable (20, 20', 20", 20"') et du deuxième connecteur enfichable (50) orienté en parallèle à un plan de fixation (E) dans lequel le deuxième connecteur enfichable (50) est prévu pour être fixé à une paroi de wagon.

2. Dispositif de connexion électrique (1) selon la revendication 1, **caractérisé en ce qu'**un dispositif de verrouillage (2) est présent avec lequel chaque premier connecteur enfichable (20, 20', 20", 20"') peut être verrouillé sur le deuxième connecteur enfichable (50) à l'état assemblé.

3. Dispositif de connexion électrique (1) selon la revendication 2, **caractérisé en ce que** le dispositif de verrouillage (2) est réalisé comme un dispositif de vissage qui permet un vissage de chaque premier connecteur enfichable (20, 20', 20", 20"') avec le deuxième connecteur enfichable (50).

4. Dispositif de connexion électrique (1) selon la revendication 1, dans lequel le deuxième connecteur enfichable (50) est prévu pour être fixé à la paroi de wagon de telle sorte que la direction d'enfichage (A) s'étend horizontalement, et la première direction de sortie de câble (B) est orientée vers le bas dans la direction verticale.

5. Dispositif de connexion électrique (1) selon la revendication 1, **caractérisé en ce que** le deuxième connecteur enfichable (50) présente au moins un élément de fixation (53) pour fixer le deuxième connecteur enfichable (50) à une surface de montage d'une paroi de wagon.

6. Dispositif de connexion électrique (1) selon la revendication 5, **caractérisé en ce que** l'élément de fixation (53) comprend un profilé de montage avec lequel un boîtier du deuxième connecteur enfichable (50) peut être fixé à une distance de la surface de montage.

7. Véhicule ferroviaire, comprenant au moins deux wagons accouplés, dans lequel chacun des deux wagons accouplés est pourvu d'au moins un dispositif de connexion électrique (1) selon l'une quelconque des revendications précédentes 1 à 6, **caractérisé en ce que** sur chacun des wagons accouplés, respectivement un deuxième connecteur enfichable (50) est fixé à respectivement une paroi de wagon, et respectivement un premier connecteur enfichable (20, 20', 20", 20"') est assemblé avec le deuxième connecteur enfichable (50), dans lequel les premiers connecteurs enfichables (20, 20', 20", 20"') sont connectés les uns aux autres par le câble raccordé.
